(19) **Europäisches Patentamt**
**European Patent Office**
**Office européen des brevets**

(11) **EP 2 232 950 B1**

(12) **EUROPÄISCHE PATENTSCHRIFT**

(45) Veröffentlichungstag und Bekanntmachung des Hinweises auf die Patenterteilung:
**21.11.2012 Patentblatt 2012/47**

(21) Anmeldenummer: **08707958.8**

(22) Anmeldetag: **17.01.2008**

(51) Int Cl.:
***H05B 33/08*** (2006.01)

(86) Internationale Anmeldenummer:
**PCT/EP2008/050511**

(87) Internationale Veröffentlichungsnummer:
**WO 2009/089912 (23.07.2009 Gazette 2009/30)**

(54) **BUCK-KONVERTER UND VERFAHREN ZUM BEREITSTELLEN EINES STROMS FÜR MINDESTENS EINE LED**

BUCK CONVERTER AND METHOD FOR PROVIDING A CURRENT FOR AT LEAST ONE LED

CONVERTISSEUR ABAISSEUR DE TENSION ET PROCÉDÉ POUR PRÉVOIR UN COURANT DESTINÉ À AU MOINS UNE LED

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**29.09.2010 Patentblatt 2010/39**

(73) Patentinhaber: **OSRAM AG**
**81543 München (DE)**

(72) Erfinder: **RUDOLPH, Bernd**
**85659 Forstern (DE)**

(56) Entgegenhaltungen:
**WO-A-2008/001246         WO-A2-2004/006629**
**US-A1- 2007 013 323**

## Beschreibung

### Technisches Gebiet

Die vorliegende Erfindung betrifft einen Buck-Konverter zum Bereitstellen eines Stroms für mindestens eine LED mit einem Eingang mit einem ersten und einem zweiten Eingangsanschluss zum Anschließen einer Gleichspannungsquelle, einem Ausgang mit einem ersten und einem zweiten Ausgangsanschluss zum Anschließen der mindestens einen LED und einer Buckdiode, einer Buckdrossel und einem Buck-Hauptschalter, der eine Steuerelektrode, eine Arbeitselektrode und eine Bezugselektrode aufweist.

### Stand der Technik

Mit dem Vordringen von LEDs in weite Bereiche der Allgemeinbeleuchtung ergibt sich ein großer Bedarf an einfachen und kostengünstigen Stromversorgungsschaltungen für diese Bauteile. Es gibt mittlerweile eine Vielzahl von insbesondere integrierten Schaltungen, die für derartige Anforderungen konzipiert wurden. Lediglich beispielhaft seien hier angeführt die Bausteine LM3402 der Firma National sowie der Baustein LT3474 der Firma Linear Technology. Derartige integrierte Schaltungen sind jedoch für einen Einsatz in Massenprodukten häufig zu teuer. Es besteht daher ein Bedarf an einer möglichst kostengünstigen Stromversorgungsschaltung für mindestens eine LED.

In der Schrift WO 2004/006629 ist ein Buck-Konverter für LEDs offenbart.

### Darstellung der Erfindung

Die Aufgabe der vorliegenden Erfindung besteht deshalb darin, einen eingangs genannten Buck-Konverter derart weiterzubilden, dass er als möglichst kostengünstige Stromversorgungsschaltung für mindestens eine LED Anwendung finden kann.

Diese Aufgaben werden gelöst durch einen Buck-Konverter mit den Merkmalen von Patentanspruch 1.

Der vorliegenden Erfindung liegt die Erkenntnis zugrunde, dass diese Aufgaben gelöst werden können, wenn ein Buck-Konverter als Zweipunktregler für den an die mindestens eine LED bereitzustellenden Strom aufgebaut wird. Der Buck-Konverter soll insbesondere so aufgebaut werden, dass es ermöglicht wird, den Ein- und Ausschaltzeitpunkt des Buck-Hauptschalters jeweils nur durch die Basis-Emitter-Flussspannung eines Kleinsignalbipolartransistors zu bestimmen. Dadurch ist der Maximalwert und der Minimalwert des Stroms durch die mindestens eine LED einstellbar und damit dessen Mittelwert und dessen Rippel. Aufgrund des bevorzugten Betriebs eines erfindungsgemäßen Buck-Konverters aus einer Niedervolt-Gleichspannungsquelle, kann der Buck-Konverter im Continuous Mode betrieben werden, d. h. der Minimalwert des an die mindestens eine LED bereitgestellten Stroms ist ungleich Null.

Besonders kostengünstig sind gegebenenfalls weitere benötigte aktive Schalter ebenfalls als Bipolartransistoren ausgebildet.

Bei der erfindungsgemäßen Realisierung wird demnach durch den ersten Hilfsschalter der Maximalwert des an die mindestens eine LED bereitgestellten Stroms festgelegt und durch den zweiten Hilfsschalter der Minimalwert dieses Stroms.

Durch diese Maßnahmen lässt sich eine äußerst einfache und kostengünstige Stromversorgungsschaltung für mindestens eine LED realisieren. Bei Verwendung von Bipolartransistoren für die elektronischen Schalter ergeben sich Realisierungskosten und ein Platzbedarf, die unter den entsprechenden Vergleichsgrößen einer Realisierung durch eine integrierte Schaltung liegen.

Wenngleich im Nachfolgenden die vorliegende Erfindung am Beispiel der Speisung aus einer Niedervolt-Gleichspannungsquelle, beispielsweise einer Batterie, dargestellt wird, so ist diese ohne weiteres durch Vorschaltung einer entsprechenden Gleichrichtung aus einer Netzspannung (100 bis 230 V) speisbar, sofern zumindest die parallel zum Gleichrichterausgang gekoppelten Transistoren durch spannungsfeste Transistoren realisiert werden.

Gemäß einer bevorzugten Ausführungsform sind die erste Spannung und die zweite Spannung derart dimensioniert, dass in der Freilaufphase des Buck-Konverters der erste Hilfsschalter vor dem zweiten Hilfsschalter in den nicht-leitenden Zustand übergeht. Damit wird die Möglichkeit eröffnet, sowohl die erste Spannung als auch die zweite Spannung an ohmschen Widerständen abzugreifen, die beide vom selben Strom durchflossen werden. Der Zeitpunkt, wann welcher Hilfsschalter in den nicht-leitenden Zustand übergeht, kann dadurch auf besonders einfache Weise durch Dimensionierung des zugehörigen ohmschen Widerstands, an dem die entsprechende Spannung abgegriffen wird, eingestellt werden.

Bevorzugt weisen der erste und der zweite Hilfsschalter jeweils eine Steuerelektrode, eine Bezugselektrode und eine Arbeitselektrode auf, wobei die erste Spannung und die zweite Spannung zwischen die Steuerelektrode und die Bezugselektrode des jeweiligen Hilfsschalters gekoppelt sind, wobei in der Freilaufphase des Buck-Konverters die zweite Spannung größer als die erste Spannung ist.

Gemäß einer bevorzugten Ausführungsform umfasst der Buck-Konverter weiterhin einen ersten Shunt-Widerstand und einen zweiten Shunt-Widerstand, wobei die am ersten Shunt-Widerstand abfallende Spannung die erste Spannung darstellt und wobei die am zweiten Shunt-Widerstand abfallende Spannung die zweite Spannung darstellt. Wie bereits erwähnt, kann dann durch einfache Dimensionierung der Shunt-Widerstände festgelegt werden, wann der Buck-Hauptschalter ein- und ausgeschaltet wird. Dadurch werden Maximal- und Minimalwert des an die mindestens eine LED bereitgestellten Stroms auf einfache Weise festgelegt.

Bevorzugt ist der erste Shunt-Widerstand derart angeordnet, dass er in der Aufladephase des Buck-Konverters von dem an die mindestens eine LED bereitgestellten Strom durchflossen wird. Da in der Aufladephase des Buck-Konverters noch kein Strom in dem Zweig fließt, in dem die Buckdiode angeordnet ist, ermöglicht eine derartige Anordnung des ersten Shunt-Widerstands die Einstellung des Maximalwerts des an die mindestens eine LED bereitgestellten Stroms.

Dabei ist der erste Shunt-Widerstand bevorzugt zwischen den zweiten Ausgangsanschluss und ein Bezugspotential gekoppelt. Dadurch ist die erste Spannung auf das Bezugspotential bezogen und ermöglicht eine besonders einfache Kopplung an den ersten Hilfstransistor, sofern dessen Bezugselektrode ebenfalls an das Bezugspotential gekoppelt ist.

Bevorzugt ist der zweite Shunt-Widerstand derart angeordnet, dass er in der Freilaufphase, nicht jedoch in der Aufladephase des Buck-Konverters, von dem an die mindestens eine LED bereitgestellten Strom durchflossen wird. Damit wird ermöglicht, die an den zwei Shunt-Widerständen abfallenden Spannungen, insbesondere in der Freilaufphase des Buck-Konverters, zueinander in Relation zu setzen. Die Aktivierung des ersten Hilfsschalters zur Beendigung der Aufladephase des Buck-Konverters ist damit von der zweiten Spannung unbeeinflusst.

Bevorzugt ist der zweite Shunt-Widerstand zwischen die Buckdiode und ein Bezugspotential gekoppelt. Auch dabei ergibt sich der Vorteil, dass eine besonders einfache Kopplung der zweiten Spannung an den zweiten Hilfstransistor erfolgen kann, wenn dieser ebenfalls mit dem Bezugspotential gekoppelt ist.

Damit die erste und die zweite Spannung unmittelbar an den entsprechenden Shunt-Widerständen abgegriffen und an die entsprechenden Hilfsschalter gekoppelt werden können, ist bevorzugt der erste Shunt-Widerstand kleiner als der zweite Shunt-Widerstand. Dadurch können beide vom selben Strom durchflossen werden und es ist dennoch sichergestellt, dass die zweite Spannung in der Freilaufphase des Buck-Konverters größer ist als die erste Spannung.

Bei einer erfindungsgemäßen Realisierung sind zumindest der erste und der zweite Hilfsschalter als Bipolartransistoren ausgeführt, wobei die am ersten Shunt-Widerstand abfallende Spannung als Basis-Emitter-Spannung an den ersten Hilfsschalter und die am zweiten Shunt-Widerstand abfallende Spannung als Emitter-Basis-Spannung an den zweiten Hilfsschalter gekoppelt ist.

Gemäß einer bevorzugten Weiterbildung umfasst der Buck-Konverter einen dritten Hilfsschalter, der eine Steuerelektrode, eine Arbeitselektrode und eine Bezugselektrode aufweist, wobei die Bezugselektrode des dritten Hilfsschalters mit einem Bezugspotential gekoppelt ist, wobei die Arbeitselektrode des dritten Hilfsschalters mit der Steuerelektrode des Buck-Hauptschalters gekoppelt ist, wobei die Steuerelektrode des dritten Hilfsschalters mit dem ersten und dem zweiten Hilfsschalter gekoppelt ist. Durch diese Maßnahme steuern der erste und der zweite Hilfsschalter parallel den dritten Hilfsschalter an, der wiederum den Buck-Hauptschalter steuert. Dabei ist es besonders bevorzugt, wenn der erste und der zweite Hilfsschalter jeweils eine Steuerelektrode, eine Arbeitselektrode und eine Bezugselektrode aufweisen, wobei die Strecke Arbeitselektrode - Bezugselektrode des ersten Hilfsschalters und die Strecke Arbeitselektrode - Steuerelektrode des zweiten Hilfsschalters parallel zur Steuerstrecke, d. h. der Strecke Steuerelektrode - Bezugselektrode, des dritten Hilfsschalters gekoppelt sind. Dies eröffnet die Möglichkeit, den ersten Hilfsschalter in Emitterschaltung zu betreiben und den zweiten Hilfsschalter in Basisschaltung. Dabei ist zwischen die Bezugs- und die Steuerelektrode des ersten Hilfsschalters die am ersten Shunt-Widerstand abfallende Spannung gekoppelt und zwischen die Steuer- und die Bezugselektrode des zweiten Hilfsschalters die am zweiten Shunt-Widerstand abfallende Spannung.

Besonders bevorzugt ist die Steuerelektrode des dritten Hilfsschalters über einen ohmschen Widerstand mit dem ersten Eingangsanschluss gekoppelt. Dadurch wird sichergestellt, dass der dritte Hilfsschalter bei Anlegen einer Versorgungsgleichspannung an den Eingang des Buck-Konverters den Buck-Hauptschalter einschaltet, um ein Anlaufen des erfindungsgemäßen Buck-Konverters zu ermöglichen.

Bevorzugt ist zwischen die Steuerelektrode und die Bezugselektrode des dritten Hilfsschalters ein Kondensator gekoppelt. Dieser dient dazu, das Basispotential des dritten Hilfsschalters beim Übergang der Leitendzustände vom ersten Hilfsschalter auf den dritten Hilfsschalter (Einfluss der Schaltzeiten der Buckdiode, des ersten und des zweiten Hilfsschalters) so niedrig zu halten, dass der dritte Hilfsschalter und damit der Buck-Hauptschalter während des Abmagnetisierens der Buckdrossel auf den gewünschten Minimalstrom sicher gesperrt bleiben.

Schließlich ist es bevorzugt, wenn die Steuerelektrode des Buck-Hauptschalters über einen ohmschen Widerstand mit dem ersten Eingangsanschluss gekoppelt ist. Dadurch wird das Ausräumen der Basis des Buck-Hauptschalters, sofern dieser als Bipolartransistor realisiert wird, beschleunigt.

Weitere bevorzugte Ausführungsformen ergeben sich aus den Unteransprüchen.

## Kurze Beschreibung der Zeichnung(en)

Im Nachfolgenden wird nunmehr ein Ausführungsbeispiel eines erfindungsgemäßen Buck-Konverters unter Bezugnahme auf die beigefügte Zeichnung, die in schematischer Darstellung ein Ausführungsbeispiel eines erfindungsgemäßen Konverters zeigt, näher dargestellt.

**Bevorzugte Ausführung der Erfindung**

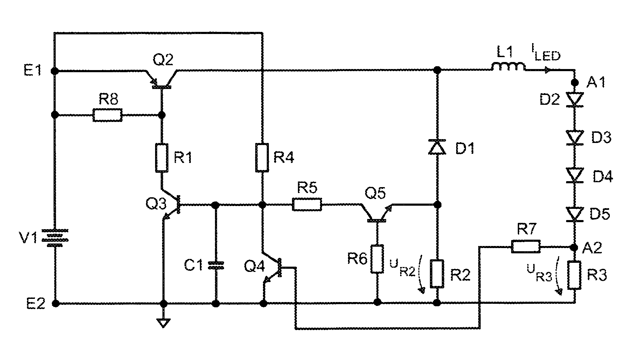

Fig. 1 zeigt in schematischer Darstellung ein Ausführungsbeispiel eines erfindungsgemäßen Buck-Konverters. Dieser weist einen Eingang mit einem ersten E1 und einem zweiten Eingangsanschluss E2 auf, zwischen denen eine Niedervolt-Gleichspannungsquelle V1 mit vorliegend 9 V gekoppelt ist. Der Eingangsanschluss E2 ist mit einem Bezugspotential gekoppelt. Zwischen den ersten E1 und den zweiten Eingangsanschluss E2 ist die Serienschaltung eines Buck-Hauptschalters Q2, einer Buckdiode D1 sowie eines ohmschen Widerstands R2 gekoppelt. Zwischen dem Verbindungspunkt des Buck-Hauptschalters Q2 und der Buckdiode D1 einerseits und einem ersten Ausgangsanschluss A1 ist eine Buckdrossel L1 gekoppelt. Zwischen dem Ausgangsanschluss A1 und einem zweiten Ausgangsanschluss A2 ist eine LED, die im Schaltbild durch die Serienschaltung von D2, D3, D4 und D5 repräsentiert wird, gekoppelt. Zwischen den Ausgangsanschluss A2 und dem Bezugspotential ist ein ohmscher Widerstand R3 gekoppelt. Die am ohmschen Widerstand R3 abfallende Spannung wird über einen ohmschen Widerstand R7 an die Basis eines ersten Hilfsschalters Q4 gekoppelt, dessen Emitter ebenfalls mit dem Bezugspotential gekoppelt ist. Der Kollektor des ersten Hilfsschalters ist über einen ohmschen Widerstand R4 mit dem ersten Eingangsanschluss E1 gekoppelt. Der Buck-Konverter weist weiterhin einen zweiten Hilfsschalter Q5 auf, dessen Emitter mit dem Verbindungspunkt zwischen der Buckdiode D1 und dem ohmschen Widerstand R2 gekoppelt ist. Die Basis des zweiten Hilfsschalters Q5 ist über einen ohmschen Widerstand R6 ebenfalls mit dem Bezugspotential gekoppelt. Der Kollektor des zweiten Hilfsschalters Q5 ist über einen ohmschen Widerstand R5 mit dem Verbindungspunkt zwischen dem ohmschen Widerstand R4 und dem Kollektor des ersten Hilfsschalters Q4 gekoppelt. Dieser Verbindungspunkt ist mit der Basis eines dritten Hilfsschalters Q3 gekoppelt, dessen Emitter mit dem Bezugspotential gekoppelt ist. Der Kollektor des dritten Hilfsschalters Q3 ist über einen ohmschen Widerstand R1 mit der Basis des Buck-Hauptschalters Q2 gekoppelt. Zwischen die Basis des dritten Hilfsschalters Q3 und das Bezugspotential ist ein Kondensator C1 geschaltet. Zwischen die Basis des Buck-Hauptschalters Q2 und den ersten Eingangsanschluss ist ein ohmscher Widerstand R8 geschaltet.

Zur Funktionsweise: Nach dem Anlegen einer Gleichspannungsquelle V1 zwischen den ersten E1 und den zweiten Eingangsanschluss E2 wird der dritte Hilfsschalter Q3 über den ohmschen Widerstand R4 in den leitenden Zustand geschaltet. Durch den vom Kollektor zum Emitter des dritten Hilfsschalters fließenden Strom wird über den ohmschen Widerstand R1 der Buck-Hauptschalter Q2 in den leitenden Zustand geschaltet. Die Aufladephase des Buck-Konverters hat begonnen. Dabei fließt ein Strom über den Buck-Hauptschalter durch die Buckdrossel, die LED D2 bis D5, über den ohmschen Widerstand R3 und das Bezugspotential zurück zum Ausgang E2.

Wenn die am ohmschen Widerstand R3 abfallende Spannung die Basis-Emitter-Schwellspannung des ersten Hilfsschalters Q4 von ca. 0,6 V überschreitet, wird der erste Hilfsschalter Q4 in den leitenden Zustand geschaltet. Dadurch wird der zuvor über den ohmschen Widerstand R4 an den dritten Hilfsschalter Q3 bereitgestellte Basisstrom über den ersten Hilfsschalter Q4 zum Bezugspotential geleitet. Der dritte Hilfsschalter Q3 geht dadurch in den nicht-leitenden Zustand über, wodurch als Folge der Buck-Hauptschalter Q2 ausgeschaltet wird. Die Freilaufphase des Buck-Konverters hat begonnen. In der Freilaufphase fließt ein Strom vom Bezugspotential über den ohmschen Widerstand R2, die Buckdiode D1, die Buckdrossel L1 sowie die LED D2 bis D5 und den ohmschen Widerstand R3 zurück zum Bezugspotential. Durch die am ohmschen Widerstand R2 abfallende Spannung wird der zweite Hilfsschalter Q5 in den leitenden Zustand geschaltet und sorgt damit dafür, dass der dritte Hilfsschalter Q3 und damit der Buck-Hauptschalter Q2 sicher ausgeschaltet bleiben.

In der Freilaufphase des Buck-Konverters geht der an die LED D2 bis D5 bereitgestellte Strom $I_{LED}$ kontinuierlich zurück, wobei jedoch aufgrund der gewählten Dimensionierung die am ohmschen Widerstand R2 abfallende Spannung immer größer ist als die am ohmschen Widerstand R3 abfallende Spannung. Dies führt dazu, dass zunächst der erste Hilfsschalter Q4 in den nicht-leitenden Zustand geschaltet wird. Da jedoch der zweite Hilfsschalter Q5 noch immer im leitenden Zustand ist, bleibt zunächst der dritte Hilfsschalter Q3 und damit der Buck-Hauptschalter Q2 ausgeschaltet. Erst wenn die am ohmschen Widerstand R2 abfallende Spannung soweit abgesunken ist, dass auch der zweite Hilfsschalter Q5 in den nicht-leitenden Zustand übergeht, kann der über den ohmschen Widerstand R4 fließende Strom wieder zur Basis des dritten Hilfsschalters Q3 fließen, diesen einschalten und damit den Buck-Hauptschalter Q2 einschalten.

Demgemäß wird der obere Grenzwert des Stroms $I_{LED}$ bestimmt zu:

$$I_{LEDmax} = U_{BEF}(Q4)/R3$$

und der untere Grenzwert des LED-Stroms bestimmt zu:

$$I_{LEDmin} = U_{BEF}(Q5)/R2$$

Die Frequenz des dreieckförmigen Stroms $I_{LED}$ wird bestimmt durch die Eingangsspannung V1, die an der LED D2 bis D5 abfallende Spannung, die Induktivität der Buckdrossel L1 sowie die Grenzwerte für den minimalen $I_{LEDmin}$ und den maximalen LED-Strom $I_{LEDmax}$.

**Patentansprüche**

1. Buck-Konverter zum Bereitstellen eines Stroms für mindestens eine LED (D2, D3, D4, D5) mit

   - einem Eingang mit einem ersten (E1) und einem zweiten Eingangsanschluss (E2) zum Anschließen einer Gleichspannungsquelle (V1);
   - einem Ausgang mit einem ersten (A1) und einem zweiten Ausgangsanschluss (A2) zum Anschließen der mindestens einen LED (D2, D3, D4, D5); und
   - einer Buckdiode (D1), einer Buckdrossel (L1) und einem Buck-Hauptschalter (Q2), der eine Steuerelektrode, eine Arbeitselektrode und eine Bezugselektrode aufweist;

   wobei die Buckdiode (D1) und der Buck-Hauptschalter (Q2) zwischen den ersten (E1) und den zweiten Eingangsanschluss (E2) gekoppelt sind, wobei die Buckdrossel (L1) zwischen den Verbindungspunkt der Buckdiode (D1) und des Buck-Hauptschalters (Q2) einerseits und den ersten Ausgangsanschluss (A1) andererseits gekoppelt ist, wobei der Buck-Konverter weiterhin umfasst:

   - einen ersten Hilfsschalter (Q4), dem eine erste Spannung ($U_{R3}$) zugeführt wird, die an einem ersten Shunt-Widerstand (R3) abfällt und die mit dem an die mindestens eine LED (D2, D3, D4, D5) bereitgestellten Strom ($I_{LED}$) korreliert ist; und
   - einen zweiten Hilfsschalter (Q5), dem eine zweite Spannung ($U_{R2}$) zugeführt wird, die an einem zweiten Shuntwiderstand (R2) abfällt und die mit dem an die mindestens einen LED (D2, D3, D4, D5) bereitgestellten Strom korreliert ist,

   wobei der erste Hilfsschalter (Q4) und der zweite Hilfsschalter (Q5) derart mit dem Buck-Hauptschalter (Q2) gekoppelt sind, dass durch die erste Spannung der Abschaltzeitpunkt des Buck-Hauptschalters (Q2) und durch die zweite Spannung der Einschaltzeitpunkt des Buck-Hauptschalters (Q2) festlegt ist, wobei der zweite Shunt-Widerstand (R2) derart angeordnet ist, dass er in der Freilaufphase, nicht jedoch in der Aufladephase, des Buck-Konverters von dem an die mindestens eine LED (D2, D3, D4, D5) bereitgestellten Strom ($I_{LED}$) durchflossen wird, wobei

   der erste Shunt-Widerstand (R3) derart angeordnet ist, dass er in der Aufladephase des Buck-Konverters von dem an die mindestens eine LED (D2, D3, D4, D5) bereitgestellten Strom ($I_{LED}$) durchflossen wird,
   und wobei
   der erste Shunt-Widerstand (R3) zwischen den zweiten Ausgangsanschluss (A2) und ein Bezugspotential gekoppelt ist.
   und wobei
   der zweite Shunt-Widerstand (R2) zwischen die Buckdiode (D1) und als Bezugspotential gekoppelt ist, **dadurch gekennzeichnet,**
   **dass** der erste (Q4) und der zweite Hilfsschalter (Q5) als Bipolartransistoren ausgeführt sind, wobei die am ersten Shunt-Widerstand (R3) abfallende Spannung, bezogen auf das Bezugspotenzial, als Basis-Emitter-Spannung an den ersten Hilfsschalter (Q4) und die am zweiten Shunt-Widerstand (R2) abfallende Spannung, bezogen auf das Bezugspotenzial, als Emitter-Basis-Spannung an den zweiten Hilfsschalter (Q5) gekoppelt ist.

2. Buck-Konverter nach Anspruch 1,
   **dadurch gekennzeichnet,**
   **dass** die erste Spannung ($U_{R3}$) und die zweite Spannung ($U_{R2}$) derart dimensioniert sind, dass in der Freilaufphase des Buck-Konverters der erste Hilfsschalter (Q4) vor dem zweiten Hilfsschalter (Q5) in den nicht-leitenden Zustand übergeht.

3. Buck-Konverter nach einem der Ansprüche 1 oder 2,
   **dadurch gekennzeichnet,**
   **dass** der erste (Q4) und der zweite Hilfsschalter (Q5) jeweils eine Steuerelektrode, eine Bezugselektrode und eine Arbeitselektrode aufweisen, wobei die erste Spannung ($U_{R3}$) und die zweite Spannung ($U_{R2}$) zwischen die Steuerelektrode und die Bezugselektrode des jeweiligen Hilfsschalters (Q4; Q5) gekoppelt sind, wobei in der Freilaufphase des Buck-Konverters die zweite Spannung ($U_{R2}$) größer als die erste Spannung ($U_{R3}$) ist.

4. Buck-Konverter nach Anspruch 1
   **dadurch gekennzeichnet,**
   **dass** der erste Shunt-Widerstand (R3) kleiner ist als der zweite Shunt-Widerstand (R2).

5. Buck-Konverter nach einem der vorhergehenden Ansprüche,
   **dadurch gekennzeichnet,**
   **dass** der Buck-Konverter einen dritten Hilfsschalter (Q3) umfasst, der eine Steuerelektrode, eine Arbeitselektrode und eine Bezugselektrode aufweist, wobei die Bezugselektrode des dritten Hilfsschalters (Q3) mit einem Bezugspotential gekoppelt ist, wobei die Arbeitselektrode des dritten Hilfsschalters (Q3) mit der Steuerelektrode des Buck-Hauptschalters (Q2) gekoppelt ist, wobei die Steuerelektrode des dritten Hilfsschalters (Q3) mit dem ersten (Q4) und dem zweiten Hilfsschalter (Q5) gekoppelt ist.

**6.** Buck-Konverter nach Anspruch 5,
**dadurch gekennzeichnet,**
**dass** der erste (Q4) und der zweite Hilfsschalter (Q5) jeweils eine Steuerelektrode, eine Arbeitselektrode und eine Bezugselektrode aufweisen, wobei die Strecke Arbeitselektrode - Bezugselektrode des ersten Hilfsschalters (Q4) und die Strecke Arbeitselektrode - Steuerelektrode des zweiten Hilfsschalters (Q5) parallel zur Steuerstrecke, d.h. der Strecke Steuerelektrode - Bezugselektrode, des dritten Hilfsschalters (Q3) gekoppelt sind.

**7.** Buck-Konverter nach Anspruch 6,
**dadurch gekennzeichnet,**
**dass** zwischen die Bezugs- und die Steuerelektrode des ersten Hilfsschalters (Q4) die am ersten Shunt-Widerstand abfallende Spannung gekoppelt ist, und dass zwischen die Steuer- und die Bezugselektrode des zweiten Hilfsschalters (Q5) die am zweiten Shunt-Widerstand abfallende Spannung gekoppelt ist.

**8.** Buck-Konverter nach einem der Ansprüche 5 bis 7,
**dadurch gekennzeichnet,**
**dass** die Steuerelektrode des dritten Hilfsschalters (Q3) über einen ohmschen Widerstand (R4) mit dem ersten Eingangsanschluss (E1) gekoppelt ist.

**9.** Buck-Konverter nach einem der Ansprüche 5 bis 8,
**dadurch gekennzeichnet,**
**dass** zwischen die Steuerelektrode und die Bezugselektrode des dritten Hilfsschalters (Q3) ein Kondensator (C1) gekoppelt ist.

**10.** Buck-Konverter nach einem der vorhergehenden Ansprüche,
**dadurch gekennzeichnet,**
**dass** die Steuerelektrode des Buck-Hauptschalters über einen ohmschen Widerstand (R8) mit dem ersten Eingangsanschluss (E1) gekoppelt ist.

**Claims**

**1.** Buck converter for providing a current for at least one LED (D2, D3, D4, D5) having

- an input with a first input connection (E1) and a second input connection (E2) for connecting a DC voltage source (V1) ;
- an output with a first output connection (A1) and a second output connection (A2) for connecting the at least one LED (D2, D3, D4, D5); and
- a Buck diode (D1), a Buck inductor (L1) and a Buck main switch (Q2), which has a control electrode, a working electrode and a reference electrode;

wherein the Buck diode (D1) and the Buck main switch (Q2) are coupled between the first input connection (E1) and the second input connection (E2), wherein the Buck inductor (L1) is coupled between the connecting point for the Buck diode (D1) and the Buck main switch (Q2), on the one hand, and the first output connection (A1), on the other hand, wherein the Buck converter also comprises:

- a first auxiliary switch (Q4) which is supplied with a first voltage ($U_{R3}$), which drops across a first shunt resistor (R3) and which is correlated to the current ($I_{LED}$) provided for the at least one LED (D2, D3, D4, D5) ; and
- a second auxiliary switch (Q5) which is supplied with a second voltage ($U_{R2}$), which drops across a second shunt resistor (R2) and which is correlated to the current provided for the at least one LED (D2, D3, D4, D5), wherein the first auxiliary switch (Q4) and the second auxiliary switch (Q5) are coupled to the Buck main switch (Q2) such that the first voltage stipulates the switch-off time for the Buck main switch (Q2) and the second voltage stipulates the switch-on time for the Buck main switch (Q2), wherein

the second shunt resistor (R2) is arranged such that in the freewheeling phase, but not in the charging phase, of the Buck converter it carries the current ($I_{LED}$) provided for the at least one LED (D2, D3, D4, D5) , wherein
the first shunt resistor (R3) is arranged such that in the charging phase of the Buck converter it carries the current ($I_{LED}$) provided for the at least one LED (D2, D3, D4, D5), and wherein the first shunt resistor (R3) is coupled between the second output connection (A2) and a reference potential, and wherein the second shunt resistor (R2) is coupled between the Buck diode (D1) and the reference potential,
**characterized**
**in that** the first auxiliary switch (Q4) and the second auxiliary switch (Q5) are in the form of bipolar transistors, wherein the voltage drop across the first shunt resistor (R3) in relation to the reference potential is coupled as a base/emitter voltage to the first auxiliary switch (Q4), and the voltage drop across the second shunt resistor (R2) in relation to the reference potential is coupled as an emitter/base voltage to the second auxiliary switch (Q5).

**2.** Buck converter according to Claim 1,
**characterized**
**in that** the first voltage ($U_{R3}$) and the second voltage ($U_{R2}$) are dimensioned such that in the freewheeling phase of the Buck converter the first auxiliary switch (Q4) changes to the nonconducting state before the second auxiliary switch (Q5).

**3.** Buck converter according to one of Claims 1 and 2, **characterized in that** the first auxiliary switch (Q4) and the second auxiliary switch (Q5) each have a control electrode, a reference electrode and a working electrode, wherein the first voltage ($U_{R3}$) and the second voltage ($U_{R2}$) are coupled between the control electrode and the reference electrode of the respective auxiliary switch (Q4; Q5), wherein in the freewheeling phase of the Buck converter the second voltage ($U_{R2}$) is larger than the first voltage ($U_{R3}$).

**4.** Buck converter according to Claim 1, **characterized in that** the first shunt resistor (R3) is smaller than the second shunt resistor (R2).

**5.** Buck converter according to one of the preceding claims, **characterized in that** the Buck converter comprises a third auxiliary switch (Q3) which has a control electrode, a working electrode and a reference electrode, wherein the reference electrode of the third auxiliary switch (Q3) is coupled to a reference potential, wherein the working electrode of the third auxiliary switch (Q3) is coupled to the control electrode of the Buck main switch (Q2), wherein the control electrode of the third auxiliary switch (Q3) is coupled to the first auxiliary switch (Q4) and to the second auxiliary switch (Q5).

**6.** Buck converter according to Claim 5, **characterized in that** the first auxiliary switch (Q4) and the second auxiliary switch (Q5) each have a control electrode, a working electrode and a reference electrode, wherein the working electrode - reference electrode path of the first auxiliary switch (Q4) and the working electrode - control electrode path of the second auxiliary switch (Q5) are coupled in parallel to the control path, i.e. the control electrode - reference electrode path, of the third auxiliary switch (Q3).

**7.** Buck converter according to Claim 6, **characterized in that** the reference and control electrodes of the first auxiliary switch (Q4) have the voltage drop across the first shunt resistor coupled between them, and in that the control and reference electrodes of the second auxiliary switch (Q5) have the voltage drop across the second shunt resistor coupled between them.

**8.** Buck converter according to one of Claims 5 to 7, **characterized in that** the control electrode of the third auxiliary switch (Q3) is coupled to the first input connection (E1) via a nonreactive resistor (R4).

**9.** Buck converter according to one of Claims 5 to 8, **characterized in that** the control electrode and the reference electrode of the third auxiliary switch (Q3) have a capacitor (C1) coupled between them.

**10.** Buck converter according to one of the preceding claims, **characterized in that** the control electrode of the Buck main switch is coupled to the first input connection (E1) via a nonreactive resistor (R8).

**Revendications**

**1.** Convertisseur abaisseur de tension pour fournir un courant destiné à au moins une LED (D2, D3, D4, D5) comprenant

  - une entrée avec un premier branchement d'entrée (E1) et un second branchement d'entrée (E2) pour le raccordement d'une source tension continue (V1) ;
  - une sortie avec un premier branchement de sortie (A1) et un second branchement de sortie (A2) pour le raccordement de la ou au moins une LED (D2, D3, D4, D5) ; et
  - une diode d'abaissement de tension (D1), une bobine de choc d'abaissement de tension (L1) et un interrupteur principal abaisseur de tension (Q2), qui présente une électrode de commande, une électrode de travail et une électrode de référence ;

la diode d'abaissement de tension (D1) et l'interrupteur principal d'abaissement de tension (Q2) étant couplés entre le premier branchement d'entrée (E1) et le second branchement d'entrée (E2), la bobine de choc d'abaissement de tension (L1) étant couplée entre le point de liaison de la diode d'abaissement de tension (D1) et de l'interrupteur principal abaisseur de tension (Q2) d'une part et le premier branchement de sortie (A1) d'autre part,

le convertisseur abaisseur de tension comprenant également :

  - un premier interrupteur auxiliaire (Q4) auquel est amenée une première tension ($U_{R3}$), qui chute sur une première résistance en dérivation (R3) et qui est corrélée avec le courant ($I_{LED}$) mis à disposition sur la au moins une LED (D2, D3, D4, D5) ; et
  - un second interrupteur auxiliaire (Q5), auquel est amenée une seconde tension ($U_{R2}$), qui chute sur une seconde résistance en dérivation (R2) et qui est en corrélation avec le courant fourni sur la au moins une LED (D2, D3, D4, D5),

le premier interrupteur auxiliaire (Q4) et le second interrupteur auxiliaire (Q5) étant couplés avec l'interrupteur principal abaisseur de tension (Q2) de telle sorte que le moment de déconnexion de l'interrupteur principal abaisseur de tension (Q2) est défini par la première tension et le moment d'enclenchement de l'interrupteur principal abaisseur de tension (Q2) est défini par la seconde tension,

la seconde résistance en dérivation (R2) étant disposée de telle sorte qu'elle est parcourue par le courant ($I_{LED}$) fournit à la au moins une LED (D2, D3, D4, D5) lors de la phase de marche libre, mais pas lors de la phase de chargement, du convertisseur abaisseur de tension,

la première résistance en dérivation (R3) étant disposée de telle sorte qu'elle est traversée lors de la phase de chargement du convertisseur abaisseur de tension par le courant ($I_{LED}$) fourni sur la au moins une LED (D2, D3, D4, D5),

et la première résistance en dérivation (R3) étant couplée entre le second branchement de sortie (A2) et un potentiel de référence,

et la seconde résistance en dérivation (R2) étant couplée entre la diode d'abaissement de tension (D1) et le potentiel de référence,

**caractérisé**

**en ce que** le premier interrupteur auxiliaire (Q4) et le second interrupteur auxiliaire (Q5) sont réalisés sous forme de transistors bipolaires, la tension chutant sur la première résistance en dérivation (R3) étant couplée par rapport au potentiel de référence, comme tension d'émetteur de base au premier interrupteur auxiliaire (Q4) et la tension chutant sur la seconde résistance en dérivation (R2) étant couplée, par rapport au potentiel de référence, comme tension de base d'émetteur au second interrupteur auxiliaire (Q5).

2. Convertisseur abaisseur de tension selon la revendication 1,
   **caractérisé**
   **en ce que** la première tension ($U_{R3}$) et la seconde tension ($U_{R2}$) sont dimensionnées de telle sorte que, lors de la phase de marche libre du convertisseur abaisseur de tension, le premier interrupteur auxiliaire (Q4) passe dans l'état non conducteur avant le second interrupteur auxiliaire (Q5).

3. Convertisseur abaisseur de tension selon l'une des revendications 1 ou 2,
   **caractérisé**
   **en ce que** le premier interrupteur auxiliaire (Q4) et le second interrupteur auxiliaire (Q5) présentent chacun une électrode de commande, une électrode de référence et une électrode de travail, la première tension ($U_{R3}$) et la seconde tension ($U_{R2}$) étant couplées entre l'électrode de commande et l'électrode de référence de l'interrupteur auxiliaire (Q4 ; Q5) respectif, la seconde tension ($U_{R2}$) étant supérieure à la première tension ($U_{R3}$) dans la phase de marche à vide du convertisseur abaisseur de tension.

4. Convertisseur abaisseur de tension selon la revendication 1,
   **caractérisé**
   **en ce que** la première résistance en dérivation (R3) est inférieure à la seconde résistance en dérivation (R2).

5. Convertisseur abaisseur de tension selon l'une des revendications précédentes,
   **caractérisé**
   **en ce que** le convertisseur abaisseur de tension comprend un troisième interrupteur auxiliaire (Q3), qui présente une électrode de commande, une électrode de travail et une électrode de référence, l'électrode de référence du troisième interrupteur auxiliaire (Q3) étant couplée avec un potentiel de référence, l'électrode de travail du troisième interrupteur auxiliaire (Q3) étant couplée avec l'électrode de commande de l'interrupteur principal abaisseur de tension (Q2), l'électrode de commande du troisième interrupteur auxiliaire (Q3) étant couplée avec le premier interrupteur auxiliaire (Q4) et le second interrupteur auxiliaire (Q5).

6. Convertisseur abaisseur de tension selon la revendication 5,
   **caractérisé**
   **en ce que** le premier interrupteur auxiliaire (Q4) et le second interrupteur auxiliaire (Q5) présentent chacun une électrode de commande, une électrode de travail et une électrode de référence, le tronçon électrode de travail-électrode de référence du premier interrupteur auxiliaire (Q4) et le tronçon électrode de travail - électrode de commande du second interrupteur auxiliaire (Q5) étant couplés parallèlement au tronçon de commande, c'est-à-dire le tronçon électrode de commande - électrode de référence, du troisième interrupteur auxiliaire (Q3).

7. Convertisseur abaisseur de tension selon la revendication 6,
   **caractérisé**
   **en ce que** la tension chutant sur la première résistance en dérivation est couplée entre l'électrode de référence et l'électrode de commande du premier interrupteur auxiliaire (Q4), et en ce que la tension chutant sur la seconde résistance en dérivation est couplée entre l'électrode de commande et l'électrode de référence du second interrupteur auxiliaire (Q5).

8. Convertisseur abaisseur de tension selon l'une des revendications 5 à 7,
   **caractérisé**

**en ce que** l'électrode de commande du troisième interrupteur auxiliaire (Q3) est couplée par une résistance ohmique (R4) au premier branchement d'entrée (E1).

9. Convertisseur abaisseur de tension selon l'une des revendications 5 à 8,
   **caractérisé**
   **en ce qu'**un condensateur (C1) est couplé entre l'électrode de commande et l'électrode de référence du troisième interrupteur auxiliaire (Q3).

10. Convertisseur abaisseur de tension selon l'une des revendications précédentes,
    **caractérisé**
    **en ce que** l'électrode de commande de l'interrupteur principal abaisseur de tension est couplée par une résistance ohmique (R8) avec le premier branchement d'entrée (E1).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004006629 A